# FASCICULE DE BREVET EUROPEEN

(11) **EP 3 427 068 B1**
(45) Date de publication et mention de la délivrance du brevet: **14.04.2021**
(21) Numéro de dépôt: 17711346.1
(22) Date de dépôt: 06.03.2017
(51) Int. Cl.: G01P 5/02

(54) **DISPOSITIF DE MESURE DE VITESSE D'UN VEHICULE EN MOUVEMENT**
VORRICHTUNG ZUR MESSUNG DER GESCHWINDIGKEIT EINES SICH BEWEGENDEN FAHRZEUGES
DEVICE FOR MEASURING THE SPEED OF A MOVING VEHICLE

(30) Priorité: 07.03.2016 CH 2932016
(43) Date de publication de la demande: 16.01.2019
(73) Titulaire: Thoma, Marc, 1355 L'Abergement (CH)
(72) Inventeur: Thoma, Marc, 1355 L'Abergement (CH)
(74) Mandataire: Ganguillet, Cyril
(86) Numéro de dépôt international: PCT/IB2017/051292
(87) Numéro de publication internationale: WO 2017/153890

(56) Documents cités:
- WO-A1-2006/131954
- DE-C- 697 588
- FR-A1- 2 768 520
- US-A- 2 061 189
- US-A1- 2007 034 001

## Description

### Domaine technique :

La présente invention concerne un moyen de mesure de la vitesse d'un véhicule (moto, vélo, voiture, bateau à moteur ou à voile, avion ou autre) qui se concrétise par le mouvement visible par le conducteur d'un dispositif qui bouge par la modification des forces aérodynamiques liées à la vitesse du dit véhicule. Des parties du dispositif, sensibles à des forces aérodynamiques, se meuvent à partir d'une certaine vitesse, car ces forces sont suffisantes pour s'opposer à des forces de rappel obtenues, par exemple, par des ressorts non-linéaires.

### Arrière-plan technologique :

Les compteurs de vitesse actuels sont basés sur une mesure de la vitesse de rotation de roues (voiture, moto, vélo) ou d'hélices (bateau) ou encore de la différence de pression dynamique et statique pour un avion (tube de Pitot). La vitesse mesurée est généralement visible sous la forme d'un affichage qui est soit une aiguille sur un cadran gradué, soit un chiffre pour un affichage digital.

### Résumé de l'invention :

La présente invention vise donc à pallier les inconvénients de l'art antérieur, en proposant un dispositif esthétique et ludique de mesure de vitesse d'un véhicule en mouvement.

A cet effet, l'invention concerne un dispositif mécanique de mesure de vitesse relative d'un véhicule en mouvement par rapport à un milieu fluide définit par la revendication 1.

Dans une exécution particulière, le dispositif est articulé pour prendre une pluralité de positions intermédiaires, entre lesquelles les seuils de changement de position correspondent chacun à une vitesse prédéterminée et pré-étalonnée d'un mobile par rapport au milieu fluide particulier dans lequel ledit dispositif est agencé pour évoluer, et en ce qu'il comporte au moins une zone d'articulation ou de flexion entre deux dits tronçons successifs, autorisant le mouvement relatif d'un des deux dits tronçons par rapport à l'autre quand ils sont soumis à des résultantes de forces de portance différentes.

Dans une exécution particulière, le dispositif comporte au moins une articulation mécanique constituant une dite zone d'articulation dudit dispositif.

Dans une exécution particulière, le dispositif comporte au moins une zone plus flexible que deux tronçons qui lui sont adjacents, ladite zone plus flexible constituant une dite zone de flexion dudit dispositif.

Dans une exécution particulière, la zone d'articulation ou de flexion la plus éloignée desdits moyens de fixation est agencée pour autoriser un déploiement du tronçon distal, le plus éloigné desdits moyens de fixation, à une vitesse relative inférieure à la vitesse relative de déploiement du tronçon immédiatement adjacent du côté desdits moyens de fixation.

Dans une exécution particulière, chaque dite zone d'articulation ou de flexion est agencée pour autoriser un déploiement du tronçon le plus éloigné desdits moyens de fixation qu'elle supporte d'un premier côté extérieur, à une vitesse relative inférieure à la vitesse relative de déploiement du tronçon immédiatement adjacent qu'elle supporte d'un deuxième côté intérieur, du côté desdits moyens de fixation .

Dans une exécution particulière, lesdits moyens de rappel élastique exercent un couple de rappel variable entre lesdits moyens de fixation et l'extrémité distale de ladite aile.

Dans une exécution particulière, le dispositif comporte une pluralité d'ailes chacune attachée ou articulée auxdits moyens de fixation qui sont communs à ladite pluralité d'ailes.

Dans une exécution particulière, chaque dite aile est agencée pour une plage de vitesses relatives particulière.

Dans une exécution particulière, lesdites ailes sont disposées par paires symétriques par rapport à un plan longitudinal passant par une droite correspondant à la trajectoire frontale moyenne dudit véhicule.

Dans une exécution particulière, le dispositif au moins un capteur de changement de position d'un dit tronçon, ledit capteur étant agencé pour communiquer avec des moyens de pilotage et/ou d'affichage que comporte ledit dispositif ou un véhicule sur lequel est installé ledit dispositif.

L'invention concerne encore un véhicule agencé pour circuler dans un milieu fluide, caractérisé en ce qu'il comporte des moyens de réception agencés pour recevoir lesdits moyens de fixation d'un tel dispositif, lesdits moyens de réception étant agencés dans une zone frontale dudit véhicule, dans le sens du déplacement dudit véhicule, et dans le milieu fluide dans lequel évolue ledit véhicule.

Dans une exécution particulière, le véhicule comporte, fixé par ses dits moyens de fixation auxdits moyens de réception, au moins un tel dispositif.

Dans une exécution particulière, le véhicule comporte au moins un dispositif avec au moins un capteur tel que décrit ci-dessus, et il comporte des moyens de pilotage et/ou d'affichage agencés pour traiter au moins une information reçue dudit capteur et la transformer pour communiquer une information visuelle ou/et sonore à un utilisateur dudit véhicule.

### Brève description des dessins :

D'autres caractéristiques et avantages de la présente invention apparaitront dans la description suivante de plusieurs exemples de réalisation du dispositif de mesure de vitesse d'un véhicule selon la présente invention donnés à titre illustratif et non-limitatif, en référence aux dessins annexés, dans lesquels :
- La Figure 1 illustre une portion d'aile formée par un dispositif de mesure de vitesse selon la présente invention ;
- La Figure 2 est une représentation graphique de l'évolution de la distance d en fonction de la vitesse v dans l'exemple de réalisation de la figure 1 ;
- Les Figures 3a à 3d illustrent un premier exemple de réalisation du dispositif de mesure de vitesse de la présente invention dans plusieurs positions de déploiement successives;
- Les Figures 4a et 4b illustrent un deuxième exemple de réalisation du dispositif de mesure de vitesse de la présente invention dans deux positions particulières de déploiement.

### Description détaillée de l'invention :

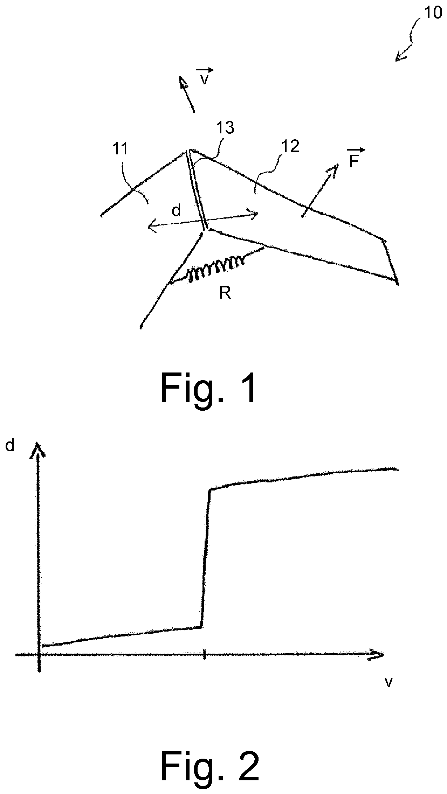

En référence à la Figure 1, il est représenté une portion d'aile formée par un dispositif 10 de mesure de vitesse selon la présente invention. Cette portion d'aile est formée notamment de deux segments adjacents 11 et 12 reliés entre eux de manière pivotante au niveau d'une zone d'articulation 13. Chacun des segments 11, 12 possède une forme spécifique et est disposé de manière judicieuse par rapport au vecteur-vitesse v auquel est soumise la portion d'aile dans le milieu fluide dans lequel elle évolue. Cette forme et cette disposition déterminent les forces aérodynamiques et en particulier la portance F auxquelles sont soumis les segments 11 et 12 et qui tendent à amener la portion d'aile dans une position déployée. Les segments 11 et 12 sont par ailleurs reliés entre eux par un moyen de rappel R, du type ressort non linéaire, ledit moyen de rappel R tendant à ramener la portion d'aile dans une position initiale non déployée. Ainsi, les forces de portée F des segments d'ailes combinées à la force de rappel exercée par le moyen de rappel R est calculée de manière adaptée permet un déploiement de la portion d'aile à une vitesse déterminée. Ce déploiement aboutit en particulier à une augmentation de la distance d séparant deux points fixes des segments 11 et 12. Plusieurs mouvements différents pourront ainsi être combinés en disposant plusieurs segments d'ailes en série dans un même dispositif, par exemple. Chaque partie du dispositif se déploiera ainsi à une vitesse différente. Les moyens de rappel peuvent être de simples ressorts non-linéaires ou des systèmes mécaniques plus évolués, par exemple, à déclenchement. Une portance F sur l'aile peut ainsi actionner un mécanisme mécanique seulement lorsqu'elle est supérieure à une certaine valeur. Le mouvement se fait comme illustré à la Figure 2. Ce n'est que lorsque la vitesse v dépasse une valeur voulue que le système bouge et produit une augmentation relativement abrupte de la distance d séparant deux points fixes de deux segments adjacents de l'aile.

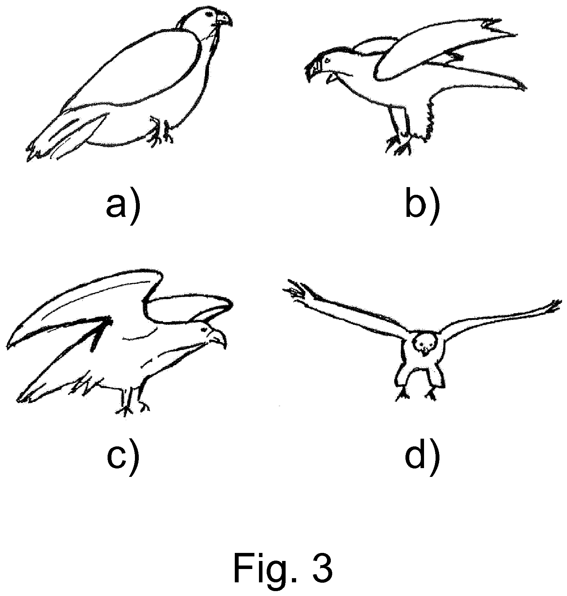

Un premier exemple de réalisation est illustré aux Figures 3a à 3d sous la forme d'un aigle disposé à l'avant d'une moto. Ces figures illustrent les positions que prend le dispositif au fur et à mesure que la moto accélère. Dans ce cas, les mouvements du dispositif se décomposent en quatre étapes et ont, par exemple, les caractéristiques suivantes:
a) L'aigle est au repos, ailes rentrées.
b) Les ailes commencent à s'ouvrir à 40 ± 5 km/h.
c) Une position intermédiaire, ailes à moitié déployées à une vitesse de 55 ± 5 km/h.
d) Les ailes sont complètement déployées à 70 ± 5 km/h.

Le passage d'une position à l'autre est fluide et sans saccade. Le dispositif doit naturellement résister à une vitesse d'au moins 150 km/h (soit la vitesse maximale autorisée en Suisse, plus une marge de sécurité de 25%). De plus, l'aigle peut être actionné à la main et il est possible de bloquer les ailes en position ouverte ou fermée alors que la moto est à l'arrêt ou en mouvement.

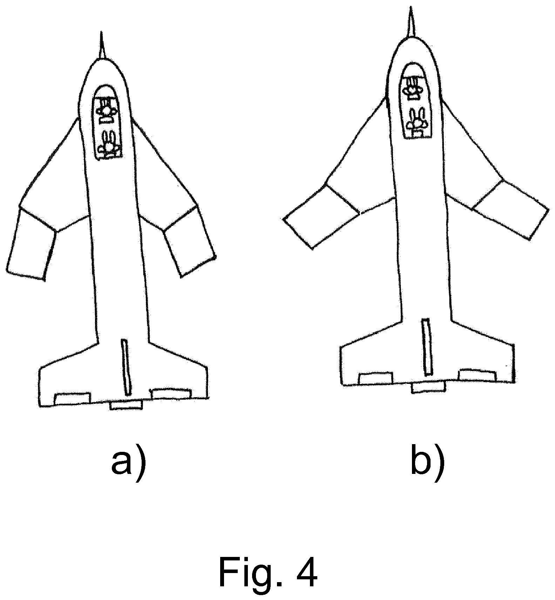

Un deuxième exemple de réalisation est illustré aux Figures 4a et 4b sous la forme d'un avion. Ces figures illustrent les positions que prend le dispositif selon la vitesse du dispositif. Dans ce cas, seules deux positions stables sont possibles, par exemple, avec les caractéristiques suivantes:
a) La vitesse est supérieure à 100 km. Les ailes sont rentrées.
b) La vitesse est inférieure à 100 km. Les ailes sont ouvertes.

### Autres domaines d'application :

- Automobile : on peut imaginer des systèmes et des figurines bien connues dans le domaine automobile qui sont mises en mouvement, ceci à des vitesses prédéterminées.
- Navigation : comme pour l'automobile des systèmes similaires pourraient être placés sur des bateaux.
- Aéronautique : de même, un tel dispositif sur le nez d'un avion pourrait, par exemple, indiquer la vitesse nécessaire pour le décollage et à l'inverse se rétracter lorsque la vitesse de décrochage serait atteinte.

### Autres variantes :

- Sachant que des objets trop saillants pourraient être refusés par certains offices de la circulation, navigation ou aéronautique, des dispositifs faits à partir de matériaux mous pourraient tout-à-fait être élaborés sur le même principe. On pourrait par exemple les mettre sur des vélos pour enfant afin de leur indiquer que leur vitesse est trop élevée.
- Des effets sonores pourraient aussi être envisagés, en faisant « siffler », grâce à l'écoulement de l'air dans des cavités ou des tubes dédiés, ceci à nouveau à partir ou au passage d'une vitesse définie.
- Bien que le dispositif de l'invention soit prévu à la base sans électronique, on pourrait envisager de réaliser plusieurs variantes incluant une partie électronique. On pourrait, par exemple, utiliser une batterie alimentée par des capteurs solaires pour éclairer le dispositif dans la nuit avec des couleurs qui varieraient selon la vitesse.

En résumé, le dispositif de l'invention se transforme en fonction de la vitesse atteinte par le véhicule, en changeant de forme à une vitesse déterminée. Les forces aérodynamiques, générées par ledit véhicule, sont suffisantes pour faire bouger au moins une partie dudit dispositif pour que le conducteur puisse le voir et en déduire la vitesse à laquelle il se déplace, et ,ceci, dans les deux sens, c'est-à-dire lorsque le véhicule, soit accélère, soit décélère.

## Revendications

1. Dispositif (10) mécanique de mesure de vitesse relative d'un véhicule en mouvement par rapport à un milieu fluide, comportant des moyens de fixation à un tel véhicule pour son agencement dans une zone frontale dudit véhicule, dans le sens du déplacement dudit véhicule, et dans le milieu fluide dans lequel évolue ledit véhicule, ledit dispositif (10) comprenant en outre au moins une aile attachée ou articulée auxdits moyens de fixation, ladite aile est conçue pour changer de forme en fonction de la vitesse relative dudit véhicule par rapport au milieu fluide,
ladite aile comprend une pluralité de tronçons d'aile adjacents (11, 12) agencés en série et une pluralité de zones d'articulation ou de flexion (13), chacune desdites zones d'articulation ou de flexion étant agencée entre une paire correspondante de tronçons d'aile adjacents de l'aile, ladite aile étant agencée pour occuper, entre une position de repos repliée et une position extrême de service complètement déployée, au moins une position intermédiaire partiellement déployée,
chaque position intermédiaire de ladite aile est déterminée par la portance aérodynamique (F) agissant sur lesdits tronçons d'aile adjacents (11, 12),
les tronçons d'aile adjacents (11, 12) sont arrangés de telle manière que la portance aérodynamique (F) à laquelle sont soumis les tronçons d'aile adjacents (11, 12) tend à déployer l'aile,
chaque zone d'articulation ou de flexion (13) est couplée à des moyens de rappel élastique (R) agencés pour tendre à ramener ladite aile vers ladite position de repos quand la vitesse relative du véhicule par rapport au milieu fluide diminue,
et les tronçons d'aile de déploient à des vitesses différentes.

2. Dispositif (10) selon la revendication 1, **caractérisé en ce que** ladite aile est articulée pour prendre une pluralité de positions intermédiaires successives, entre lesquelles les seuils de changement de position correspondent chacun à une vitesse pré-déterminée et pré-étalonnée du véhicule par rapport au milieu fluide dans lequel ledit dispositif est agencé pour évoluer.

3. Dispositif (10) selon la revendication 1 ou 2, **caractérisé en ce que** chaque zone d'articulation (13) consiste en une articulation mécanique.

4. Dispositif (10) selon la revendication 1 ou 2, **caractérisé en ce que** chaque zone de flexion (13) consiste en une zone plus flexible agencée entre lesdits tronçons d'aile adjacents (11, 12).

5. Dispositif (10) selon l'une quelconque des revendications précédentes, **caractérisé en ce que** lesdites zones d'articulation ou de flexion sont agencées pour autoriser un déploiement du tronçon d'aile le plus éloigné desdits moyens de fixation, à une vitesse relative inférieure à la vitesse relative de déploiement du tronçon d'aile immédiatement adjacent auxdits moyens de fixation.

6. Dispositif (10) selon l'une quelconque des revendications 1 à 4, **caractérisé en ce que** lesdites zones d'articulation ou de flexion sont agencées pour autoriser un déploiement du tronçon d'aile le plus éloigné desdits moyens de fixation, à une vitesse relative supérieure à la vitesse relative de déploiement du tronçon d'aile immédiatement adjacent auxdits moyens de fixation.

7. Dispositif (10) selon l'une quelconques des revendications précédentes, **caractérisé en ce qu'**il comporte une pluralité d'ailes, chacune desdites ailes étant attachée ou articulée auxdits moyens de fixation qui sont communs à ladite pluralité d'ailes.

8. Dispositif (10) selon la revendication 7, **caractérisé en ce que** chaque aile est agencée pour une plage particulière de vitesses relatives du véhicule par rapport au milieu fluide.

9. Dispositif (10) selon la revendication 7 ou 8, **caractérisé en ce que** lesdites ailes sont disposées par paires symétriques par rapport à un plan longitudinal passant par une droite correspondant à la trajectoire frontale moyenne dudit véhicule.

10. Dispositif (10) selon l'une des revendications 1 à 9, **caractérisée en ce qu'**il comporte au moins un capteur de changement de position d'un desdits tronçons d'aile (11, 12), ledit capteur étant agencé pour communiquer avec des moyens de pilotage et/ou d'affichage que comporte ledit dispositif ou un véhicule sur lequel est installé ledit dispositif.

11. Véhicule agencé pour circuler dans un milieu fluide, **caractérisé en ce qu'**il comporte des moyens de réception agencés pour recevoir lesdits moyens de fixation d'un dispositif (10) selon l'une des revendications 1 à 10, ledit dispositif (10) étant agencés dans une zone frontale dudit véhicule, dans le sens du déplacement dudit véhicule, et dans le milieu fluide dans lequel évolue ledit véhicule.

12. Véhicule selon la revendication 11, **caractérisé en ce que** le dispositif (10) est un dispositif selon la revendication 10, et **en ce qu'**il comporte des moyens de pilotage et/ou d'affichage agencés pour traiter au moins une information reçue dudit capteur et la transformer pour communiquer une information visuelle ou/et sonore à un utilisateur dudit véhicule.

## Patentansprüche

1. Mechanische Vorrichtung (10) zum Messen der relativen Geschwindigkeit eines sich bewegenden Fahrzeugs in Bezug auf ein fluides Medium, aufweisend Befestigungsmittel zur Befestigung an einem solchen Fahrzeug zu ihrer Anordnung in einem Frontbereich des Fahrzeugs in Richtung der Fortbewegung des Fahrzeugs und in dem fluiden Medium, in dem sich das Fahrzeug bewegt, wobei die Vorrichtung (10) ferner mindestens einen Flügel umfasst, der an die Befestigungsmittel angehängt oder angelenkt ist,
wobei der Flügel dazu ausgelegt ist, in Abhängigkeit von der relativen Geschwindigkeit des Fahrzeugs in Bezug auf das fluide Medium seine Form zu ändern,
wobei der Flügel eine Mehrzahl von benachbarten Flügelabschnitten (11, 12), die in Reihe angeordnet sind, und eine Mehrzahl von Gelenk- oder Flexionsbereichen (13) umfasst, wobei jeder der Gelenk- oder Flexionsbereiche zwischen einem passenden Paar benachbarter Flügelabschnitte des Flügels angeordnet ist, wobei der Flügel dazu eingerichtet ist, zwischen einer eingezogenen Ruhestellung und einer vollständig entfalteten Betriebsendstellung mindestens eine teilweise entfaltete Zwischenstellung einzunehmen,
wobei jede Zwischenstellung des Flügels durch den aerodynamischen Auftrieb (F) bestimmt wird, der auf die benachbarten Flügelabschnitte (11, 12) einwirkt,
wobei die benachbarten Flügelabschnitte (11, 12) so gestaltet sind, dass der aerodynamische Auftrieb (F), dem die benachbarten Flügelabschnitte (11, 12) ausgesetzt sind, dazu tendiert, den Flügel zu entfalten,
wobei jeder Gelenk- oder Flexionsbereich (13) an elastische Rückstellmittel (R) gekoppelt ist, die dazu eingerichtet sind, dazu zu tendieren, den Flügel zur Ruhestellung zurückzuführen, wenn die relative Geschwindigkeit des Fahrzeugs in Bezug auf das fluide Medium abnimmt,
und wobei sich die Flügelabschnitte bei unterschiedlichen Geschwindigkeiten entfalten.

2. Vorrichtung (10) nach Anspruch 1, **dadurch gekennzeichnet, dass** der Flügel angelenkt ist, um eine Mehrzahl von aufeinander folgenden Zwischenstellungen einzunehmen, zwischen denen die Stellungsänderungsschwellenwerte jeweils einer vorbestimmten und vorkalibrierten Geschwindigkeit des Fahrzeugs in Bezug auf das fluide Medium entsprechen, in dem die Vorrichtung angeordnet ist, um sich zu bewegen.

3. Vorrichtung (10) nach Anspruch 1 oder 2, **dadurch gekennzeichnet, dass** jeder Gelenkbereich (13) aus einem mechanischen Gelenk besteht.

4. Vorrichtung (10) nach Anspruch 1 oder 2, **dadurch gekennzeichnet, dass** jeder Flexionsbereich (13) aus einem flexibleren Bereich besteht, der zwischen den benachbarten Flügelabschnitten (11, 12) angeordnet ist.

5. Vorrichtung (10) nach einem der vorhergehenden Ansprüche, **dadurch gekennzeichnet, dass** die Gelenk- oder Flexionsbereiche dazu eingerichtet sind, ein Entfalten des von den Befestigungsmitteln am weitesten entfernten Flügelabschnitts bei einer relativen Geschwindigkeit zuzulassen, die geringer als die relative Entfaltungsgeschwindigkeit des zu den Befestigungsmitteln unmittelbar benachbarten Flügelabschnitts ist.

6. Vorrichtung (10) nach einem der Ansprüche 1 bis 4, **dadurch gekennzeichnet, dass** die Gelenk- oder Flexionsbereiche dazu eingerichtet sind, ein Entfalten des von den Befestigungsmitteln am weitesten entfernten Flügelabschnitts bei einer relativen Geschwindigkeit zuzulassen, die höher als die relative Entfaltungsgeschwindigkeit des zu den Befestigungsmitteln unmittelbar benachbarten Flügelabschnitts ist.

7. Vorrichtung (10) nach einem der vorhergehenden Ansprüche, **dadurch gekennzeichnet, dass** sie eine Mehrzahl von Flügeln umfasst, wobei jeder der Flügel an die Befestigungsmittel, die der Mehrzahl von Flügeln gemein sind, angehängt oder angelenkt ist.

8. Vorrichtung (10) nach Anspruch 7, **dadurch gekennzeichnet, dass** jeder Flügel für einen besonderen Bereich relativer Geschwindigkeiten des Fahrzeugs in Bezug auf das fluide Medium eingerichtet ist.

9. Vorrichtung (10) nach Anspruch 7 oder 8, **dadurch gekennzeichnet, dass** die Flügel paarweise symmetrisch in Bezug auf eine Längsebene angeordnet sind, die durch eine Gerade verläuft, die der durchschnittlichen frontalen Trajektorie des Fahrzeugs entspricht.

10. Vorrichtung (10) nach einem der Ansprüche 1 bis 9, **dadurch gekennzeichnet, dass** sie mindestens einen Sensor zum Messen einer Positionsänderung eines der Flügelabschnitte (11, 12) aufweist, wobei der Sensor dazu eingerichtet ist, mit Ansteuerungs- und/oder Anzeigemitteln zu kommunizieren, welche die Vorrichtung oder ein Fahrzeug, an dem die Vorrichtung angebracht ist, aufweist.

11. Fahrzeug, das dazu eingerichtet ist, sich in einem fluiden Medium zu bewegen, **dadurch gekennzeichnet, dass** es Aufnahmemittel aufweist, die dazu eingerichtet sind, die Befestigungsmittel einer Vorrichtung (10) nach einem der Ansprüche 1 bis 10 aufzunehmen, wobei die Vorrichtung (10) in einem Frontbereich des Fahrzeugs in Richtung der Fortbewegung des Fahrzeugs und in dem fluiden Medium, in dem sich das Fahrzeug bewegt, angeordnet ist.

12. Fahrzeug nach Anspruch 11, **dadurch gekennzeichnet, dass** die Vorrichtung (10) eine Vorrichtung nach Anspruch 10 ist und dass sie Ansteuerungs- und/oder Anzeigemittel aufweist, die dazu eingerichtet sind, mindestens eine von dem Sensor empfangene Information zu verarbeiten und sie umzuwandeln, um eine optische und/oder akustische Information an einen Benutzer des Fahrzeugs zu übermitteln.

## Claims

1. Mechanical device (10) for measuring the relative speed of a vehicle in motion with respect to a fluidic medium, comprising means of attachment to such a vehicle so that it can be arranged in a frontal zone of said vehicle, in the direction of travel of said vehicle, and in the fluidic medium in which said vehicle is evolving, said device (10) further comprising at least one wing attached or articulated to said attachment means,
wherein said wing is designed to change shape according to the relative speed of said vehicle with respect to the fluidic medium,
wherein said wing comprises a plurality of adjacent wing segments (11, 12) arranged in series and a plurality of articulation or flexing zones (13), each of said articulation or flexing zones being arranged between a corresponding pair of adjacent wing segments of the wing, said wing being designed to occupy, between a furled rest position and a fully deployed extreme service position, at least one partially deployed intermediate position,
wherein each intermediate position of said wing is determined by the aerodynamic lift (F) acting on said adjacent wing segments (11, 12),
wherein the adjacent wing segments (11, 12) are arranged in such a way that the aerodynamic lift (F) to which the adjacent wing segments (11, 12) are subjected has a tendency to deploy the wing,
wherein each articulation or flexing zone (13) is coupled to elastic return means (R) arranged to tend to return said wing towards said rest position when the relative speed of the vehicle with respect to the fluidic medium decreases,
and wherein the wing segments deploy at different speeds.

2. Device (10) according to claim 1, **characterized in that** said wing is articulated so as to adopt a plurality of successive intermediate positions, between which the position-change thresholds each correspond to a predetermined and precalibrated speed of the vehicle with respect to the fluidic medium in which said device is desgined to evolve.

3. Device (10) according to claim 1 or 2, **characterized in that** each articulation zone (13) consists of a mechanical articulation.

4. Device (10) according to claim 1 or 2, **characterized in that** each flexing zone (13) consists of a more flexible zone arranged between said adjacent wing segments (11, 12) .

5. Device (10) according to any one of the preceding claims, **characterized in that** said articulation or flexing zones are designed to allow deployment of the wing segment furthest away from said attachment means, at a relative speed that is lower than the relative speed for deployment of the wing segment immediately adjacent to said attachment means.

6. Device (10) according to any one of claims 1 to 4, **characterized in that** said articulation or flexing zones are designed to allow deployment of the wing segment furthest away from said attachment means, at a relative speed that is higher than the relative speed for deployment of the wing segment immediately adjacent to said attachment means.

7. Device (10) according to any one of the preceding claims, **characterized in that** it comprises a plurality of wings, each of said wings being attached or articulated to said attachment means which are common to said plurality of wings.

8. Device (10) according to claim 7, **characterized in that** each wing is designed for a particular range of relative speeds of the vehicle with respect to the fluidic medium.

9. Device (10) according to claim 7 or 8, **characterized in that** said wings are arranged in symmetrical pairs with respect to a longitudinal plane passing through a straight line corresponding to the mean forward trajectory of said vehicle.

10. Device (10) according to one of claims 1 to 9, **characterized in that** it comprises at least one sensor sensing a change in position of one of said wing segments (11, 12), said sensor being designed to communicate with control and/or display means that said device, or a vehicle on which said device is installed, comprises.

11. Vehicle designed to travel in a fluidic medium, **characterized in that** it comprises receiving means designed to receive said attachment means of a device (10) according to one of claims 1 to 10, said device (10) being arranged in a frontal zone of said vehicle, in the direction of travel of said vehicle, and in the fluidic medium in which said vehicle evolves.

12. Vehicle according to claim 11, **characterized in that** the device (10) is a device according to claim 10, and **in that** it comprises control and/or display means designed to process at least one piece of information received from said sensor and convert it in order to communicate visual and/or audible information to a user of said vehicle.
